# FASCICULE DE BREVET EUROPEEN

(11) **EP 2 724 996 B1**
(45) Date de publication et mention de la délivrance du brevet: **01.01.2025**
(21) Numéro de dépôt: 13190122.5
(22) Date de dépôt: 24.10.2013
(51) Int. Cl.: C04B 28/02, C04B 28/04

(54) **Béton léger agrosourcé et son utilisation**
Leichtbeton aus Materialien landwirtschaftlichen Ursprungs, und seine Verwendung
Agro-sourced lightweight concrete and use thereof

(30) Priorité: 25.10.2012 FR 1260177
(43) Date de publication de la demande: 30.04.2014
(73) Titulaire: Centre d'Etudes et de Recherches de l'Industrie du Beton Manufacture, 28230 Epernon (FR)
(72) Inventeur: JACQUEMOT, François, 78660 ABLIS (FR); ROUGEAU, Patrick, 91440 BURES SUR YVETTE (FR)
(74) Mandataire: Cabinet Beau de Loménie

(56) Documents cités:
- WO-A2-2006/120353
- CN-A- 101 117 005
- DE-C1- 10 046 387
- FR-A1- 2 700 162
- GB-A- 1 121 572
- KR-A- 20020 012 718
- KR-B1- 100 397 695

## Description

### Domaine technique de l'invention

L'invention concerne un béton léger respectueux de l'environnement contenant des granulats agrosourcés. La résistance à la compression de ce béton est suffisante pour permettre, entre autres, la réalisation de blocs de maçonnerie porteurs.

### Etat de la technique

Les bétons de granulats agrosourcés existent en France depuis les années 1960. Grâce à leurs bonnes propriétés acoustiques et hygrothermiques, ils sont destinés à la réalisation d'écrans anti-bruit, de chapes de sol et d'éléments de mur. Les bétons de granulats agrosourcés sont obtenus en mélangeant des granulats agrosourcés tels que des copeaux de bois, de la chènevotte de chanvre ou des anas de lin avec un liant minéral (hydraulique ou aérien) et de l'eau. Ils sont ensuite versés dans des moules puis vibro-compactés.

Une difficulté rencontrée pour l'utilisation de ces bétons est la faible résistance mécanique obtenue. En effet, l'utilisation de chaux, dont l'impact environnemental et les performances mécaniques sont moindres que le ciment, est courante (demandes de brevet FR-A-2 784 374, FR-A-2 826 360). De plus, les granulats agrosourcés, généralement en forme de plaquette, se prêtent assez mal à l'obtention d'un matériau compact et ils ne participent pas aux résistances mécaniques du fait de leur faible rigidité. Ainsi, les bétons de granulats agrosourcés sont généralement destinés à des applications de béton non porteur telles que les blocs de coffrage, les blocs de remplissage (demande de brevet FR-A-2 871 487) ou sont associés à un béton traditionnel porteur à base de granulats minéraux (demande de brevet FR-A-2 948 708). Une autre difficulté rencontrée lors de la production de ces bétons est le fort effet retard provoqué par les granulats agrosourcés sur le durcissement des liants minéraux. Au niveau industriel, cela nécessite de très fortes capacités de stockage ou une réduction de la productivité, ce qui n'est généralement pas envisageable. Les solutions employées consistent généralement à traiter les granulats par des procédés physiques et éventuellement chimiques (demande de brevet FR-A-2 700 162) ou bien à les enrober pour les inerter (demande de brevet FR-A-2 643 363).

On connaît par ailleurs d'après la demande de brevet FR-A-2 946 640 un matériau composite à base de chènevotte de chanvre et d'une quantité très majoritaire de chaux naturelle et de métakaolin.

La demande de brevet DE 10046387 C1 décrit de manière générale un procédé pour fabriquer un béton de bois qui consiste à mélanger notamment : (i) 15 à 50% en poids d'un matériau choisi parmi un ciment Portland, un ciment obtenu par interbroyage ou un ciment de haut fourneau ; (ii) 30 à 70% en poids de fines particules de bois ; (iii) 15 à 30% en poids d'eau ; et (iv) 0,35 à 5% en poids d'agent retardant. Ce document ne décrit pas de béton contant un liant hydraulique constitué de ciment et d'additions minérales. Les exemples de ce document décrivent des bétons contenant du CaCl₂ avec un rapport massique CaCl₂/ciment supérieur à 10%.

La demande CN-A-101117005 décrit de manière générale un béton comprenant (i) 15 à 35% en poids de copeaux de bois ; (ii) 15 à 45% en poids de cendres volantes ; (iii) 30 à 55% en poids de ciment ; (iv) 1 à 3% en poids de sodium ; et (v) 0,3 à 1,8% en poids de chlorure. Les exemples de ce document décrivent des bétons contenant du ciment, des cendres volantes et du CaCl₂ avec un rapport massique CaCl₂ / (ciment + cendres volantes) inférieur ou égal à 2%.

### Problème technique à résoudre

Les enjeux du développement durable concernent aujourd'hui tous les secteurs industriels, et notamment celui du bâtiment qui doit faire face lui aussi aux problématiques d'économies d'énergie et de réduction des émissions de gaz à effet de serre. Les analyses de cycle de vie des bâtiments actuels montrent que la majeure partie de leur empreinte environnementale provient d'une part des matériaux de construction utilisés et d'autre part de l'énergie consommée pour leur chauffage, qui lui-même est lié à l'efficacité de l'isolation thermique des bâtiments.

Le problème technique que se propose de résoudre la présente invention est la mise au point d'un béton dont les propriétés sont adaptées à la réalisation d'éléments ou parties d'ouvrage pour le bâtiment, qui présente un faible impact sur l'environnement, et qui participe à l'isolation thermique des constructions réalisées du fait de sa faible conductivité thermique.

Un autre problème que se propose de résoudre la présente invention est la mise au point d'un béton tel que décrit ci-dessus en utilisant des matières premières couramment utilisées par les industriels du béton ou largement disponibles sur le marché.

Les techniques de mise en oeuvre des éléments de construction obtenus à partir du béton doivent en outre correspondre aux techniques les plus employées sur le terrain, à savoir les techniques de maçonnerie à base de blocs porteurs.

### Résumé de l'invention

Il a été découvert de manière surprenante, et c'est là le fondement de l'invention, qu'il est possible de mettre au point un béton répondant au « cahier des charges » énoncé ci-dessus à partir de granulats agrosourcés, d'un liant à base de ciment et d'un accélérateur de durcissement pour béton.

L'invention porte donc sur la formulation, la préparation et l'utilisation d'un béton respectueux de l'environnement à base de granulats agrosourcés et qui présente des propriétés isolantes. La résistance à la compression de ce béton est suffisante pour permettre, entre autres, la réalisation de blocs de maçonnerie porteurs.

### Description de l'invention

Selon un premier aspect, l'invention concerne un béton (frais) comprenant un liant constitué de ciment et d'addition(s) minérale(s), des granulats d'origine agrosourcée, un accélérateur de durcissement, de l'eau et éventuellement un ou plusieurs constituants choisis parmi une charge minérale, des fibres, un hydrofuge, un rétenteur d'eau, un autre adjuvant pour béton ou de la chaux. Le béton conforme à l'invention comprend les différents constituants susmentionnés dans les proportions suivantes :
- une proportion massique d'addition(s) minérale(s), relativement au ciment, comprise dans la gamme allant d'environ 100% à environ 800%,
- une proportion volumique de granulats d'origine agrosourcée, relativement au liant, comprise dans la gamme allant d'environ 200% à environ 350%,
- une proportion massique d'accélérateur de durcissement, relativement au liant, comprise dans la gamme allant d'environ 3,5% à environ 7,5%,
- une proportion massique d'eau, relativement au liant, comprise dans la gamme allant d'environ 30% à environ 100%,
- une proportion massique de charge minérale, relativement au liant, inférieure ou égale à environ 100%,
- une proportion massique de constituants optionnels autres qu'une charge minérale, relativement au liant, inférieure ou égale à environ 5%.

Selon un mode de réalisation de l'invention, ledit béton est essentiellement constitué d'un liant, de granulats d'origine agrosourcée, d'accélérateur de durcissement, d'eau et de constituants optionnels tels que définis ci-dessus. On entend par « essentiellement constitué de » le fait que le béton ne comprend pas d'autres constituants susceptibles d'affecter ses propriétés mécaniques et physico-chimiques (notamment masse volumique et conductivité thermique).

Selon un autre mode de réalisation de l'invention, ledit béton est constitué d'un liant, de granulats d'origine agrosourcée, d'accélérateur de durcissement, d'eau et de constituants optionnels tels que définis ci-dessus. Dans un mode de réalisation particulièrement avantageux, qui peut être combiné avec d'autres modes de réalisation ou aspects de l'invention, ledit béton est exempt de chaux.

Le liant utilisé dans le cadre de la présente invention est un matériau minéral finement broyé comprenant un ciment et une ou plusieurs additions minérales.

Le ciment utilisé est un matériau hydraulique finement divisé qui se présente avantageusement sous forme pulvérulente de granulométrie telle qu'au moins 90% des particules passent au tamis de 200 µm (D₉₀ < 200 µm) et qui, mélangé à de l'eau, durcit par suite de réactions et de processus d'hydratation. C'est un ciment Portland tel que défini dans la norme EN 197-1.

L'addition minérale utilisée est une addition calcaire telle que celles définies dans la norme NF P 18-508 ; une addition siliceuse telle que celles définies dans la norme NF P 18-509 ; un laitier de haut fourneau tel que ceux définis dans la norme EN 15167-1 ; des cendres volantes telles que celles définies dans la norme EN 450-1 ; des fumées de silice telles que celles définies dans la norme EN 13263-1 ; des métakaolins tels que ceux définis dans la norme NF P 18-513 ; ou un mélange de ces composés. De manière avantageuse, la proportion massique d'addition(s) minérale(s), relativement au ciment, est comprise dans la gamme d'environ 200% à environ 700%.

Le béton conforme à l'invention comprend également des granulats d'origine agrosourcée. On entend par « granulats d'origine agrosourcée » des granulats de matière première végétale renouvelable. Les granulats utilisés dans le cadre de l'invention peuvent être de la chènevotte de chanvre, des anas de lin, des granulats de sorgho, de miscanthus, de bois, de tout autre granulat lignocellulosique, ou un mélange de ces constituants. De manière avantageuse, on utilise de la chènevotte de chanvre, qui peut se présenter sous la forme de particules plates et allongées allant de 2 à 25 mm de longueur. La proportion volumique de granulats d'origine agrosourcée, relativement au liant, est de préférence comprise dans la gamme allant d'environ 230% à environ 330%. L'accélérateur de durcissement utilisé est un produit qui augmente la vitesse de développement des résistances initiales du béton et peut être notamment un sel de calcium comme le chlorure de calcium. La proportion massique d'accélérateur de durcissement, relativement au liant, est avantageusement comprise dans la gamme d'environ 4% à environ 6%.

La proportion massique d'eau, relativement au liant, est comprise dans la gamme allant d'environ 30% à environ 100%, de préférence dans la gamme allant d'environ 40% à environ 100%.

Les charges minérales utilisées dans le cadre de l'invention sont des granulats de masse volumique normale tels que définis dans la norme EN 12620 et/ou des granulats légers tels que définis dans la norme EN 13055-1. Le diamètre du plus gros granulat est de préférence inférieur à 8 mm.

Les fibres utilisées dans le cadre de l'invention peuvent être avantageusement des fibres naturelles.

Les hydrofuges, les rétenteurs d'eau et les adjuvants utilisés dans le cadre de l'invention sont tous avantageusement du type de ceux définis dans la norme EN 934-2.

Le béton conforme à l'invention peut être préparé selon des techniques et à l'aide d'équipements couramment utilisés dans l'industrie du béton, par mélange des différents constituants entrant dans sa composition. Ainsi, selon un autre aspect, l'invention concerne un procédé de préparation dudit béton. Selon un mode de réalisation avantageux, les constituants utilisés dans la formulation du béton sont mélangés dans un malaxeur jusqu'à l'obtention d'un mélange homogène. Le béton ainsi obtenu est ensuite versé dans un moule puis est vibro-compacté. La vibration et le compactage sont adaptés pour assurer un remplissage complet du moule. Le béton peut être démoulé immédiatement après le vibro-compactage. Il est ensuite conservé dans des conditions ambiantes, de préférence à environ 20°C et 65 % d'humidité relative.

Le béton conforme à l'invention possède à l'état frais une masse volumique comprise dans la gamme allant d'environ 800 kg/m³ à environ 1600 kg/m³, de préférence dans la gamme d'environ 1000 kg/m³ à environ 1450 kg/m³.

Une fois durci, le béton est léger, homogène, et respectueux de l'environnement. En considérant les postes de production des constituants, il présente un impact CO₂ (mesuré en kg_{eq}/m³) nul ou négatif. Il possède également avantageusement les propriétés suivantes :
- une masse volumique à l'état sec (mesurée d'après la norme EN 12390-7) comprise dans la gamme allant d'environ 600 kg/m³ à environ 1400 kg/m³, de préférence dans la gamme allant d'environ 800 kg/m³ à environ 1250 kg/m³ ;
- une conductivité thermique (selon la norme EN 12664) comprise dans la gamme allant d'environ 0,15 W/K.m à environ 0,5 W/K.m ;
- une résistance mécanique à la compression à 7 jours (mesurée d'après les principes de la norme EN 12390-3) comprise dans la gamme allant d'environ 1,5 à environ 10 MPa ;
- une résistance mécanique à la compression à 28 jours (mesurée d'après les principes de la norme EN 12390-3) comprise dans la gamme d'environ 3 à environ 15 MPa.

Du fait de ses propriétés structurelles et isolantes, le béton léger selon l'invention peut être avantageusement utilisé comme matériau de construction, pour la réalisation d'éléments de construction (durcis), tout particulièrement adaptés à la construction d'ouvrages nécessitant une bonne isolation thermique. Ainsi, selon un autre aspect, l'invention concerne un élément de construction réalisé à partir du béton léger décrit ci-dessus, en particulier un produit modulaire de type bloc de maçonnerie porteur (avec ou sans alvéoles), élément de mur, entrevous, rupteur thermique ou planelle.

L'invention est illustrée par les exemples non limitatifs suivants.

La masse volumique des bétons frais obtenus à l'exemple 1 a été déterminée en pesant des cubes de béton de 1 litre.

La résistance mécanique à la compression des bétons obtenus à l'exemple 1 a été déterminée de la manière suivante : aux échéances de 7 jours et 28 jours, un cube de béton de 1 litre a été soumis à un essai de compression selon la norme EN 12390-3 adaptée : la vitesse de montée en charge était de 0,3 kN/s et le déplacement des plateaux a été enregistré ; la valeur de résistance à la compression retenue a été déterminée par la pression maximale appliquée au cube obtenue dans le domaine élastique des déformations.

L'impact CO₂ a été déterminé en retenant comme hypothèse que le chanvre possède un impact de -1,9 t_{eq}CO₂ /t. Seul l'impact de production des constituants a été considéré dans cette approche, les autres postes du cycle de vie n'ayant pas été pris en compte.

### Exemple 1

Différentes formules de béton (détaillées dans le tableau 1) ont été préparées selon le protocole suivant : les gâchées sont effectuées dans un malaxeur Controlab de 20 litres. Les constituants sont mélangés pendant environ 30 secondes puis l'eau et le chlorure de calcium préalablement dissout sont ajoutés. L'ensemble est malaxé pendant 1 minute environ. Le béton est alors versé dans un moule métallique de dimensions 10x10x10 cm³ muni d'une rehausse. Un pilon de 8 kg est placé dans la rehausse au-dessus du béton et l'ensemble est vibré sur une table vibrante pendant 12 secondes. Une fois la vibro-compaction effectuée, le cube de béton de 1 litre est démoulé, et conservé à 20°C.

**Tableau 1**

| | **Ex.1** | **Ex.2** | **Ex.3** | **Ex.4** | **Ex.5** | **Ex. Comp.1** | **Ex. Comp.2** | **Ex. Comp.3** |
|---|---|---|---|---|---|---|---|---|
| | Dosage (kg/m³) | | | | | | | |
| Ciment | 162¹ | 105¹ | 112¹ | 182¹ | 119⁷ | 109¹ | 105¹ | 104¹ |
| Granulats agrosourcés | 108² | 131² | 125² | 121² | 148² | 122² | 131² | 130² |
| Addition minérale | 324³ | 680³ | 511³ | 547³ | 578³ | 377³ | 680³ | 337³ |
| Charge minérale | 162⁴ | - | 125⁴ | | 193⁸ | 243⁴ | - | 337³ |
| Accélérateur de durcissement | 24,3⁶ | 39,2⁶ | 37,4⁶ | 36,4⁶ | 44,4⁶ | 24,3⁶ | 23,5⁶ | 38,9⁶ |
| Superplastifiant | - | - | - | - | 2,7⁹ | - | - | - |
| Eau d'ajout | 324 | 366 | 349 | 364 | 259 | 340 | 366 | 324 |
| | | | | | | | | |
| Ratio massique % accélérateur/liant | 5 | 5 | 6 | 5 | 6,4 | 5 | 3 | 8,8 |
| Ratio volumique % granulats agro / liant | 330 | 240 | 290 | 240 | 310 | 370 | 240 | 430 |

| | | | | | | | | |
|---|---|---|---|---|---|---|---|---|
| ¹ CEM 1 52,5 N - Lafarge - Le Teil ² chènevotte de chanvre - Kanabat^{®} - Chanvrière de l'Aube ³ carbonate de calcium - Betocarb^{®} HP EN - OMYA ⁴ sable pouzzolane naturelle 0/3 mm - A2B pouzzolanes ⁵ sable fin HN 31 0,2/0,5 mm - Sibelco ⁶ chlorure de calcium CaCl₂ - Merck ⁷ CEM 1 52,5 N - Vicat - Xeuillet ⁸ sable fin HN 38 0,05/0,25 mm - Sibelco ⁹ Glenium ACE 444 - BASF | | | | | | | | |

### Exemple 2

Les propriétés des différents bétons sont indiquées dans le tableau 2 (les valeurs données représentent la moyenne de 3 expériences). La masse volumique à l'état frais et la résistance mécanique à la compression ont été déterminées comme indiqué ci-dessus.

**Tableau 2**

| | Ex. 1 | Ex.2 | Ex.3 | Ex.4 | Ex.5 | Ex. Comp. 1 | Ex. Comp.2 | Ex. Comp.3 |
|---|---|---|---|---|---|---|---|---|
| Masse volumique à l'état frais (kg/m³) | 1105 | 1320 | 1260 | 1250 | 1345 | 1215 | 1306 | 1271 |
| Masse volumique à 7 jours (kg/m³) | 980 | 1200 | 1125 | 1142 | 1230 | 1030 | 1192 | 1095 |
| Masse volumique à 28 jours (kg/m³) | 900 | 1065 | 980 | 953 | 1180 | 930 | 1100 | 997 |
| Rc à 7 jours (MPa) | 3,0 | 1,7 | 1,8 | 2,7 | 2,3 | 0,5 | 0,5 | 0,3 |
| Rc à 28 jours (MPa) | 4,5 | 4,0 | 4,2 | 4,6 | 3,2 | 0,7 | 1,0 | 0,9 |
| Impact CO₂ (kg_{eq}/m³) | -42 | -119 | -105 | -38 | -133 | -114 | -131 | -113 |

| | | | | | | | | |
|---|---|---|---|---|---|---|---|---|
| Rc = résistance à la compression | | | | | | | | |

On peut noter à la lecture du tableau 2 que les bétons selon l'invention possèdent une résistance à la compression à 28 jours suffisante pour la réalisation de blocs porteurs et excellente pour des bétons à base de granulats agrosourcés. En revanche, le béton de l'exemple comparatif 2, dont la formulation contient une quantité d'accélérateur de durcissement, relativement au liant (ciment + addition minérale), en dehors de la plage revendiquée, présente une faible résistance à la compression. Il en est de même pour le béton des exemples comparatifs 1 et 3, dont la formulation contient une quantité volumique de granulats agrosourcés, relativement au liant, supérieure à 350%.

## Revendications

1. Béton comprenant un liant constitué de ciment et d'addition(s) minérale(s), des granulats d'origine agrosourcée, un accélérateur de durcissement, et de l'eau, les composants du béton étant présents dans les proportions suivantes :
- une proportion massique d'addition(s) minérale(s), relativement au ciment, comprise dans la gamme allant de 100% á 800%, de préférence comprise dans la gamme allant de 200% á 700% ;
- une proportion volumique de granulats d'origine agrosourcée, relativement au liant, comprise dans la gamme allant de 200% à 350%, de préférence comprise dans la gamme allant de 230% à 330% ;
- une proportion massique d'accélérateur de durcissement, relativement au liant, comprise dans la gamme allant de 3,5% à 7,5%, de préférence comprise dans la gamme allant de 4% à 6% ;
- une proportion massique d'eau, relativement au liant, comprise dans la gamme allant de 30% à 100%, de préférence dans la gamme allant de 40% à 100% ;
dans lequel le ciment est un ciment Portland tel que défini dans la norme EN 197-1,
et dans lequel la ou les addition(s) minérale(s) est (sont) choisies parmi : les additions calcaires telles que définies dans la norme NF P 18-508 ; les additions siliceuses telles que définies dans la norme NF P 18-509 ; les laitiers de haut fourneau tels que définis dans la norme EN 15167-1 ; les cendres volantes telles que définies dans la norme EN 450-1 ; les fumées de silice telles que définies dans la norme EN 13263-1 ; les métakaolins tels que définis dans la norme NF P 18-513 ; ou un mélange de ces composés.

2. Béton selon la revendication 1, dans lequel les granulats d'origine agrosourcée sont choisis parmi la chènevotte de chanvre, des anas de lin, des granulats issus de sorgho, des granulats issus de miscanthus, des granulats de bois, des autres granulats lignocellulosiques, ou un mélange des constituants précités.

3. Béton selon l'une des revendications 1 à 2, dans lequel l'accélérateur de durcissement est le chlorure de calcium.

4. Béton selon l'une des revendications 1 à 3, comprenant en outre un ou plusieurs constituants choisis parmi une charge minérale, des fibres, un hydrofuge, un rétenteur d'eau, un autre adjuvant pour béton, ou de la chaux, ces constituants étant présents dans les proportions suivantes :
- une proportion massique de charge minérale, relativement au liant, inférieure ou égale à 100% ;
- une proportion massique de fibres, hydrofuge, rétenteur d'eau, chaux ou autre adjuvant pour béton, relativement au liant, inférieure ou égale à 5% ;
ladite charge minérale étant choisie parmi les granulats tels que définis dans la norme EN 12620, les granulats tels que définis dans la norme EN 13055-1 et leurs mélanges.

5. Béton selon l'une des revendications 1 à 4, qui possède :
- une résistance à la compression à 7 jours comprise dans la gamme allant de 1,5 MPa à 10 MPa ;
- une résistance à la compression à 28 jours comprise dans la gamme allant de 3 MPa à 15 MPa.

6. Béton selon l'une des revendications 1 à 5, qui possède une masse volumique à l'état sec comprise dans la gamme allant de 600 kg/m³ à 1400 kg/m³, de préférence comprise dans la gamme allant de 800 kg/m³ à 1250 kg/m³.

7. Procédé de préparation du béton tel que défini dans l'une des revendications 1 à 4, qui comprend les étapes suivantes :
- le malaxage des constituants jusqu'à l'obtention d'un mélange homogène ;
- la mise en place du mélange dans un moule par vibro-compactage ;
- le démoulage du béton et sa conservation de préférence à 20°C et 65 % d'humidité relative.

8. Utilisation, comme matériau de construction, du béton selon l'une des revendications 1 à 6.

9. Elément de construction, notamment bloc de maçonnerie, élément de mur, entrevous, rupteur thermique ou planelle, obtenu à partir du béton selon l'une des revendications 1 à 6.

## Patentansprüche

1. Beton, umfassend ein Bindemittel, das aus Zement und mineralischer(n) Ergänzung(en) besteht, Zuschlagstoffe landwirtschaftlichen Ursprungs, einen Härtungsbeschleuniger und Wasser, wobei die Bestandteile des Betons in den folgenden Anteilen vorliegen:
- ein Gewichtsanteil der mineralischen Ergänzung(en), bezogen auf den Zement, im Bereich von 100 % bis 800 %, vorzugsweise im Bereich von 200 % bis 700 % ;
- ein Volumenanteil der Zuschlagstoffe landwirtschaftlichen Ursprungs, bezogen auf das Bindemittel, im Bereich von 200% bis 350%, vorzugsweise im Bereich von 230% bis 330% ;
- ein Gewichtsanteil an Härtungsbeschleuniger, bezogen auf das Bindemittel, im Bereich von 3,5 % bis 7,5 %, vorzugsweise im Bereich von 4 % bis 6 % ;
- ein Gewichtsanteil an Wasser, bezogen auf das Bindemittel, im Bereich von 30 % bis 100 %, vorzugsweise im Bereich von 40 % bis 100 %;
wobei der Zement ein Portlandzement wie in der Norm EN 197-1 definiert,
und wobei der oder die mineralischen Ergänzung(en) ausgewählt ist (sind) aus: kalkhaltigen Zusatzstoffe wie in der Norm NF P 18-508 definiert; siliziumhaltigen Zusatzstoffe wie in der Norm NF P 18-509 definiert; Hochofenschlacke wie in der Norm EN 15167-1 definiert; Flugasche wie in der Norm EN 450-1 definiert; Siliziumdioxidrauch wie in der Norm EN 13263-1 definiert; Metakaolinen wie in der Norm NF P 18-513 definiert; oder einem Gemisch dieser Verbindungen

2. Beton nach Anspruch 1, wobei die Zuschlagstoffe landwirtschaftlichen Ursprungs ausgewählt sind aus Hanfschäben, Flachsschäben, Sorghum-Zuschlagstoffe, Miscanthus-Zuschlagstoffe, Holzzuschlagstoffe, anderen lignocellulosischen Zuschlagstoffe oder einer Mischung der vorgenannten Bestandteile.

3. Beton nach einem der Ansprüche 1 bis 2, wobei der Härtungsbeschleuniger Calciumchlorid ist.

4. Beton nach einem der Ansprüche 1 bis 3, der zusätzlich einen oder mehrere Bestandteile enthält, die aus einem mineralischen Füllstoff, Fasern, einem wasserabweisenden Mittel, einem Wasserrückhaltemittel, einem anderen Betonzusatzstoff oder Kalk ausgewählt sind, wobei diese Bestandteile in den folgenden Anteilen vorliegen:
- ein Gewichtsanteil des mineralischen Füllstoffs, bezogen auf das Bindemittel, von weniger als oder gleich 100 % ;
- ein Gewichtsanteil an Fasern, wasserabweisenden Stoffen, Wasserrückhaltemitteln, Kalk oder anderen Betonzusatzstoffen, bezogen auf das Bindemittel, von weniger als oder gleich 5 % ist;
wobei der mineralische Füllstoff ausgewählt ist aus Zuschlagstoffe wie in der Norm EN 12620 definiert, Zuschlagstoffe wie in der Norm EN 13055-1 definiert, und deren Mischungen.

5. Beton nach einem der Ansprüche 1 bis 4, der aufweist:
- eine Druckfestigkeit nach 7 Tagen im Bereich von 1,5 MPa bis 10 MPa ;
- eine Druckfestigkeit nach 28 Tagen im Bereich von 3 MPa bis 15 MPa.

6. Beton nach einem der Ansprüche 1 bis 5, der eine Trockendichte im Bereich von 600 kg/m³ bis 1400 kg/m³, vorzugsweise im Bereich von 800 kg/m³ bis 1250 kg/m³, aufweist.

7. Verfahren zur Herstellung von Beton, wie in einem der Ansprüche 1 bis 4 definiert, das die folgenden Schritte umfasst:
- das Mischen der Bestandteile bis zum Erhalt einer homogenen Mischung ;
- das Einbringen der Mischung in eine Form durch Rütteln und Verdichten ;
- das Entformen des Betons und seine Aufbewahrung vorzugsweise bei 20 °C und 65 % relativer Luftfeuchtigkeit.

8. Verwendung von Beton nach einem der Ansprüche 1 bis 6 als Baumaterial.

9. Bauelement, insbesondere Mauerblock, Wandelement, Zwischenlage, thermischer Puffer oder Planelle, das aus Beton nach einem der Ansprüche 1 bis 6 hergestellt wird.

## Claims

1. Concrete comprising a binder consisting of cement and mineral addition(s), aggregates of agro-sourced origin, a hardening accelerator, and water, the components of the concrete being present in the following proportions:
- a proportion by weight of mineral addition(s), relative to cement, in the range from 100% to 800%, preferably in the range from 200% to 700%;
- a proportion by volume of aggregates of agro-sourced origin, relative to the binder, in the range from 200% to 350%, preferably in the range from 230% to 330%;
- a proportion by weight of hardening accelerator, relative to the binder, in the range from 3.5% to 7.5%, preferably in the range from 4% to 6%;
- a proportion by weight of water, relative to the binder, in the range from 30% to 100%, preferably in the range from 40% to 100%;
wherein the cement is a Portland cement as defined in standard EN 197-1,
and wherein the mineral addition(s) is (are) selected from: limestone additions as defined in standard NF P 18-508; silica additions as defined in standard NF P 18-509; blast furnace slags as defined in standard EN 15167-1; fly ash as defined in standard EN 450-1; silica fume as defined in standard EN 13263-1; metakaolin as defined in standard NF P 18-513; or a mixture of these compounds.

2. The concrete of claim 1, wherein the aggregates of agro-sourced origin are selected from hemp shives, flax shives, granulates from sorghum, granulates from miscanthus, granulates from wood, other lignocellulosic granulates, or a mixture of the aforementioned constituents.

3. The concrete of one of claims 1 to 2, wherein the hardening accelerator is calcium chloride.

4. The concrete of one of claims 1 to 3, further comprising one or more constituents selected from a mineral filler, fibers, a water repellent, a water retainer, another concrete additive, or lime, these constituents being present in the following proportions:
- a proportion by weight of mineral filler, relative to the binder, less than or equal to 100%;
- a proportion by weight of fiber, water repellent, water retaining agent, lime or other concrete additive, relative to the binder, less than or equal to 5%;
said mineral filler being selected from granulates as defined in standard EN 12620, granulates as defined in standard EN 13055-1 and mixtures thereof.

5. The concrete of one of claims 1 to 4, which has:
- a 7-day compressive strength in the range from 1.5 MPa to 10 MPa ;
- a 28-day compressive strength in the range from 3 MPa to 15 MPa.

6. The concrete of one of claims 1 to 5, which has a dry density in the range from 600 kg/m³ to 1400 kg/m³, preferably in the range from 800 kg/m³ to 1250 kg/m³.

7. A process for preparing concrete as defined in one of claims 1 to 4, which comprises the following steps:
- mixing the constituents until a homogeneous mixture is obtained;
- placing the mixture in a mold by vibro-compaction;
- demolding the concrete and storing it, preferably at 20°C and 65% relative humidity.

8. Use, as a building material, of the concrete according to one of claims 1 to 6.

9. A building element, in particular a masonry block, wall element, stud, thermal break or plate, obtained from the concrete according to one of claims 1 to 6.
